# EUROPÄISCHE PATENTANMELDUNG

(11) **EP 0 701 018 A1**
(43) Veröffentlichungstag der Anmeldung: **13.03.1996**
(21) Anmeldenummer: 95113279.4
(22) Anmeldetag: 24.08.1995
(51) Int. Cl.: D21C 5/02

(54) **Verfahren zum Recyclen von silikonbeschichtetem Papier**

(30) Priorität: 10.09.1994 DE 4432252
(71) Anmelder: HOECHST AKTIENGESELLSCHAFT, D-65926 Frankfurt am Main (DE)
(72) Erfinder: Hentzschel, Peter, Dr., D-61440 Oberursel (DE); Kamutzki, Walter, Dr., D-64807 Dieburg (DE); Wolf, Dieter, Dr., D-64291 Darmstadt (DE)

(57) **Zusammenfassung**

Die vorliegende Erfindung betrifft ein Verfahren zum Recyclen von silikonbeschichtetem Papier durch Aufschlagen und Neubildung von Blättern, dadurch gekennzeichnet, daß das Aufschlagen in Gegenwart eines oder mehrerer Salze von Monophosphorsäureestern erfolgt.

## Beschreibung

Die vorliegende Erfindung betrifft ein Verfahren zum Recyclen von silikonbeschichtetem Papier unter Verwendung von Salzen von Monophosphorsäureestern.

Silikonbeschichtetes Papier wird als Trägerpapier für Haftklebeetiketten, Selbstklebefolien, Selbstklebebänder oder als Trennpapier für die PVC-Folienherstellung verwendet. Es fällt sowohl beim Hersteller als auch beim Verarbeiter in nicht unbeträchtlichen Mengen an und muß nach Erfüllung seiner Funktion als Träger- bzw. Trennpapier deponiert oder thermisch entsorgt, d.h. verbrannt werden. Nur in Ausnahmefällen werden bisher aus diesen Papieren qualitativ geringerwertige Papiere für Verpackungszwecke hergestellt.

Eine erneute Verwertung der Papiere nach den bei grafischen oder Verpackungspapieren üblichen Verfahren des Recyclings konnte bisher ohne Qualitätsverlust der Papiere und wegen der bei der Papierherstellung auftretenden Probleme, wie mangelhafte Desintegration der Fasern sowie Kleben von Harzpartikeln an Walzen und Filzen, nicht durchgeführt werden. Die für die Aufnahme von wasserlöslichen Bindemitteln bei der Silikonrohpapierherstellung erforderliche Blattqualität wurde nicht erreicht, so daß ein gleichmäßiger geschlossener Silikonharzfilm auf dem aus Recyclat hergestellten Silikonrohpapier nicht hergestellt werden konnte. Ein zusammenhängender Silikonharzfilm ist jedoch zur Vermeidung von Lösemitteldurchschlägen oder Haftkleberdurchschlägen unbedingt erforderlich, da anderenfalls die Abhäsiveigenschaften dieser Papiere negativ beeinflußt werden.

Unabhängig vom Zwang zur Wiederverwertung silikonbeschichteter Papiere, welche vom Gesetzgeber aufgrund von Abfallvorschriften vorgeschrieben wird, besteht seitens der Hersteller von Silikonpapieren ein großes Interesse an einer Wiederverwertung der meist aus hochwertigen Faserstoffen hergestellten Silikonpapiere.

An Versuchen, die Recyclefähigkeit von silikonbeschichteten Papieren mit verschiedenen Hilfsmitteln zu verbessern, hat es deshalb nicht gefehlt (siehe z.B. die EP-A 587 000), meist war jedoch die Blattformation aufgrund der unvollständigen Auflösung der Faserbündel äußerst mangelhaft. Das Auflösen silikonbeschichteter Papiere bei Temperaturen über 100^{o}C und Zusatz von Alkali ergab nur eine graduelle Verbesserung; für die Herstellung der gleichen Papiersorte war das Recyclat nicht zu verwenden.

Aufgabe der vorliegenden Erfindung ist es deshalb, ein Verfahren zum Recyclen von silikonbeschichtetem Papier ohne die genannten Nachteile, wie mangelnde Stoffauflösung, unvollständige Harzdispergierung, die Bildung von Harzagglomeraten und der damit verbundenen Gefahr des Klebens an Zylinderoberflächen und Filzen, zu entwickeln.

Diese Aufgabe wird in überraschender Weise gelöst durch ein Verfahren zum Recyclen von silikonbeschichtetem Papier durch Aufschlagen und Neubildung von Blättern, dadurch gekennzeichnet, daß das Aufschlagen in Gegenwart eines oder mehrerer Salze von Monophosphorsäureestern erfolgt.

Solche Salze sind bereits bekannt und zum Beispiel in der WO 90/08220 zur Wiederaufarbeitung von Altpapier beschrieben, ohne daß aber darin auf das vorliegende Problem eingegangen worden wäre. Das Aufschlagen des silikonbeschichteten Papiers kann in einem üblichen Labor-Desintegrator erfolgen, wobei das Papier in einer Stoffkonzentration von 3 bis 6 Gew.%, bevorzugt 5 Gew.%, eingesetzt wird. Im großtechnischen Maßstab finden insbesondere sogenannte Hochkonsistenzpulper Einsatz, die Stoffkonzentrationen von 15 Gew.-% und mehr bewältigen. Im allgemeinen unterstützt die durch die mechanische Arbeit freiwerdende Wärme die Redispergierung.

Bevorzugte Salze von Monophosphorsäureestern sind Verbindungen der allgemeinen Formel I 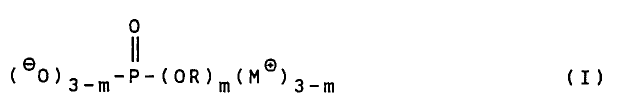
worin
- R: (C₈-C₁₈)-Alkyl oder (C₈-C₁₈)-Ethoxyalkyl,
- m: 1 oder 2 und
- M: Wasserstoff Ammonium oder ein Alkalimetall bedeuten.

Für M stehendes Alkalimetall ist beispielsweise Lithium, Natrium oder Kalium, wobei Natrium und Kalium bevorzugt sind.

(C₈-C₁₈)-Alkyl bzw. (C₈-C₁₈)-Ethoxyalkyl kann geradkettig oder verzweigt sein. Bevorzugt sind n-Octyl, 2-Ethylhexyl, n-Dodecyl und i-Tridecyl. Besonders bevorzugt ist n-Dodecyl.

Die Verbindungen der allgemeinen Formel I weisen bevorzugt Säurezahlen (mgKOH/g) von 200 bis 350 auf.

Die Verbindungen der allgemeinen Formel I können alleine oder in Mischungen untereinander eingesetzt werden. Bevorzugte Mischungen bestehen aus zwei Verbindungen der allgemeinen Formel I, die sich nur in der Zahl m unterscheiden.

Werden Mischungen aus zwei Verbindungen der allgemeinen Formel I eingesetzt, so beträgt deren molares Gewichtsverhältnis bevorzugt 1:1.

Die Verbindungen der allgemeinen Formel I werden bevorzugt in Mengen von 0,1 bis 2,0 Gew.%, besonders bevorzugt in einer Menge von 0,3 Gew.%, bezogen auf silikonbeschichtetes Papier eingesetzt.

Die Verbindungen der allgemeinen Formel I sind wasserlöslich und in der Regel lösemittelfrei.

Bevorzugt wird bei einem pH-Wert von 10 bis 12 gearbeitet, wobei pH=12 besonders bevorzugt ist. Gegebenenfalls muß der pH-Wert durch Zusatz einer Base, beispielsweise 10%iger Natronlauge, eingestellt werden.

Die Temperatur liegt bevorzugt bei 60 bis 80^{o}C, wobei 70^{o}C besonders bevorzugt sind.

Unter diesen Bedingungen wird eine vollständige Desintegration der Fasern innerhalb von 20 bis 40 Minuten erreicht, bei einer Temperatur von 70^{o}C innerhalb von 30 Minuten.

Aus den so erhaltenen Fasersuspensionen können in üblicher und dem Fachmann bekannter Weise neue Blätter gebildet werden. Diese Blätter weisen eine gute Homogenität bzw. geringe Wolkigkeit auf. Beim Trocknen der Blätter auf einem filzbespannten Trockenzylinder (Oberflächentemperatur bis 120^{o}C) zwischen Gautschpapier wird kein Kleben der getrockneten Papiere am Gautschpapier beobachtet. Im übrigen sind die verseiften Silikonharzteilchen in dem neu gebildeten Papierblatt so gut verteilt, daß auf der Blattoberfläche mittels FT-IR-Analyse kein Silikonharz mehr nachweisbar ist.

Ohne Verwendung einer Verbindung der allgemeinen Formel I ist dagegen die Blattformation ungenügend. Agglomerierte Harzteilchen sammeln sich auf der Blattoberseite an und können so zum Kleben an Trockenzylindern und Filzen führen.

In einer bevorzugten Ausführungsform des erfindungsgemäßen Verfahrens wird das Aufschlagen zusätzlich in Gegenwart eines Salzes einer Polyacrylsäure ausgeführt. Geeignete Salze von Polyacrylsäuren sind handelsüblich und beispielsweise unter den Bezeichnungen BASF Polysalz® (eingetragenes Warenzeichen der BASF AG, Ludwigshafen, Bundesrepublik Deutschland) oder Lastaron® (eingetragenes Warenzeichen der BK Ladenburg GmbH, Ladenburg, Bundesrepublik Deutschland) zu erhalten.

Ein geeignetes Salz ist beispielsweise das Natriumsalz. Die genannten Salze werden bevorzugt in Mengen von 0,3 bis 0,6 Gew.%, besonders bevorzugt in einer Menge von 0,4 Gew.%, bezogen auf silikonbeschichtetes Papier, eingesetzt.
Durch den Einsatz der genannten Salze niedermolekularer Polyacrylsäuren kann die Auflösung einzelner Faserbündel in Einzelfasern optimiert werden.

In einer weiteren bevorzugten Ausführungsform des erfindungsgemäßen Verfahrens wird dem Aufschlagen ein Flotationsprozeß nachgeschaltet. Dieser Prozeß kann in jeder Flotations-Deinking-Anlage durchgeführt werden und ist dem Fachmann an sich bekannt. Durch diesen Prozeß wird eine Entfernung oder zumindest Verminderung der Silikonharzteilchen aus der Fasersuspension erreicht. Der durch die Flotation bedingte Faserverlust ist mit 5 bis 10 Gew.%, bezogen auf das Gewicht des eingesetzten silikonbeschichteten Papiers gering.

Das erfindungsgemäße Verfahren wird durch die nachfolgenden Beispiele näher erläutert:

### Beispiel 1

100 g silikonbeschichtetes Papier von 65 g/m² wurden mit 1900 ml Wasser in einem 3 1-Desintegrator mit 2.800 Upm aufgeschlagen. Der pH-Wert der Stoffsuspension wurde mit 10%iger Natronlauge auf einen pH-Wert von 12, die Temperatur der Stoffsuspension durch vorgewärmtes Wasser auf 70^{o}C eingestellt.

100 GT (trockengerechnet) der so erhaltenen wäßrigen Fasersuspension wurden 0,172 GT einer Verbindung der allgemeinen Formel I mit R = n-Dodecanol, M = Natrium als äquimolares Gemisch aus m = 1 und m = 2 mit einem Feststoffgehalt von 93% in Form einer verdünnten, wäßrigen Lösung zugegeben.

Nach 30 Minuten Dispergierung wurden auf einem automatischen Blattbildner Blätter gebildet, luftgetrocknet und anschließend auf einem filzbespannten Trockenzylinder 10 min bei 105^{O}C zwischen Gautschpapier nachgetrocknet.

Die Blätter zeigen in der Durchsicht eine gute Blattformation und sind frei von klebenden Harzpartikeln. Durch ein FT-IR-Spektrum der Blattoberseite ist kein Silikonharz nachweisbar. Es wird kein Kleben am Gautschpapier beobachtet.
Eine Wiederholung des oben beschriebenen Vorgangs, aber ohne Einsatz der Verbindungen der Formel I, führt zu Papier mit einer starken Wolkigkeit. Silikonharz ist durch FT-IR-Spektroskopie der Blattoberseite nachweisbar. Das Papier klebt am Gautschpapier.

### Beispiel 2

Das Auflösen von silikonbeschichtetem Papier erfolgte wie in Beispiel 1, jedoch wurden zusätzlich von Beginn des Auflösens an 0,4 g eines handelsüblichen Natriumsalzes einer Polyacrylsäure in Form einer 10%igen wäßrigen Lösung zugegeben. Die Blätter zeigen in der Durchsicht eine sehr gute Blattformation und sind frei von klebenden Harzpartikeln.

### Beispiel 3

Das Auflösen von silikonbeschichtetem Papier erfolgt wie in Beispiel 1. Die Fasersuspension wurde anschließend nach einer Verdünnung auf eine Stoffkonzentration von 1% unter Zusatz von 1g Ölsäure in einer Flotations-Deinkingzelle flotiert. Die Temperatur während des Flotierens betrug 40^{o}C. Nach 10 Minuten Behandlung wurde die Luftzufuhr abgestellt. Der angereicherte Stoff enthält in abflotierter Form Silikonharz. Es wurden, wie in Beispiel 1 beschrieben, Blätter gebildet, getrocknet und auf Kleben und Silanolbanden untersucht. Zum Vergleich wurde der Versuch mit der doppelten Menge an Verbindung der allgemeinen Formel I, sowie ohne Zusatz einer Verbindung der allgemeinen Formel I wiederholt. Folgende Ergebnisse wurden erhalten:

| Menge an Hilfsstoff gemäß Beispiel 1 | Flotationsrückstand [g] | Klebetest | Silanolbanden (IR) | |
|---|---|---|---|---|
| | | | nach Flotation | Flotat |
| 0,172 | 3,8 | 2-3 | - | ++ |
| 0,344 | 4,1 | 1-2 | - | + |
| ohne Hilfsstoff | 3,3 | 2 | + | ++ |
| im Klebetest bedeuten: 1 = klebt nicht bis 4 = klebt deutlich bei den Silanol-Banden bedeuten: ++ intensiv nachweisbar + nachweisbar - nicht nachweisbar | | | | |

## Patentansprüche

1. Verfahren zum Recyclen von silikonbeschichtetem Papier durch Aufschlagen und Neubildung von Blättern, dadurch gekennzeichnet, daß das Aufschlagen in Gegenwart eines oder mehrerer Salze von Monophosphorsäureestern erfolgt.

2. Verfahren gemäß Anspruch 1, dadurch gekennzeichnet, daß die Salze der Monophosphorsäureester die allgemeine Formel I 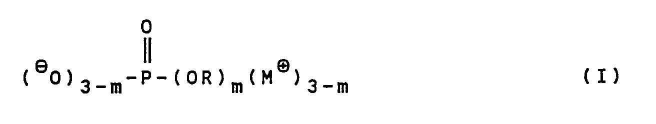 worin
R (C₈-C₁₈)-Alkyl oder (C₈-C₁₈)-Ethoxyalkyl,
m 1 oder 2 und
M Wasserstoff, Ammonium oder ein Alkalimetall bedeuten, haben.

3. Verfahren gemäß Anspruch 1 und/oder 2, dadurch gekennzeichnet, daß R n-Octyl, 2-Ethylhexyl, n-Dodecyl oder i-Tridecyl bedeutet.

4. Verfahren gemaß einem oder mehreren der Ansprüche 1 bis 3, dadurch gekennzeichnet, daß die Salze von Monophosphorsäureestern in Mengen von 0,1 bis 2,0 Gew.%, besonders bevorzugt 0,3 Gew.%, bezogen auf silikonbeschichtetes Papier, eingesetzt werden.

5. Verfahren gemaß einem oder mehreren der Ansprüche 1 bis 4, dadurch gekennzeichnet, daß das Aufschlagen bei einem pH-Wert von 10 bis 12, besonders bevorzugt 12, ausgeführt wird.

6. Verfahren gemaß einem oder mehreren der Ansprüche 1 bis 5, dadurch gekennzeichnet, daß das Aufschlagen bei einer Temperatur von 60 bis 80^{o}C, besonders bevorzugt 70^{o}C, ausgeführt wird.

7. Verfahren gemäß einem oder mehreren der Ansprüche 1 bis 6, dadurch gekennzeichnet, daß das Aufschlagen zusätzlich in Gegenwart eines Salzes einer Polyacrylsäure ausgeführt wird.

8. Verfahren gemäß einem oder mehreren der Ansprüche 1 bis 7, dadurch gekennzeichnet, daß dem Aufschlagen ein Flotationsprozeß nachgeschaltet wird.

9. Recycling-Papier, hergestellt nach einem Verfahren gemäß einem oder mehreren der Ansprüche 1 bis 8.
